(19) Europäisches Patentamt
European Patent Office
Office européen des brevets

(11) **EP 4 715 864 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
*H01J 35/10* (2006.01)    *F16C 17/02* (2006.01)
*F16C 33/24* (2006.01)    *H05G 1/02* (2006.01)

(21) Application number: **24807207.6**

(22) Date of filing: **14.05.2024**

(52) Cooperative Patent Classification (CPC):
**F16C 17/02; F16C 33/24; H01J 35/10; H05G 1/02**

(86) International application number:
**PCT/JP2024/017838**

(87) International publication number:
**WO 2024/237255 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.05.2023 JP 2023082345**

(71) Applicant: **Canon Electron Tubes & Devices Co., Ltd.**
**Otawara-shi, Tochigi 324-0036 (JP)**

(72) Inventor: **YOSHIDA, Yasufumi**
**Otawara-shi, Tochigi 324-0036 (JP)**

(74) Representative: **Henkel & Partner mbB**
**Patentanwaltskanzlei, Rechtsanwaltskanzlei**
**Maximiliansplatz 21**
**80333 München (DE)**

(54) **ROTARY ANODE TYPE X-RAY TUBE**

(57)    The present invention provides a rotary anode type X-ray tube that enables a rotor to be kept rotating in a satisfactory manner. The rotary anode type X-ray tube (1) comprises: a cathode (60); an anode target (50); a sliding bearing (3) having a rotating body (20) extending along a rotation axis (a), a fixed shaft (10), and a lubricant; and a vacuum envelope (70). The rotating body has a bearing member (21) that is formed to extend along the rotation axis and that is positioned to surround the fixed shaft. The fixed shaft is formed of a tungsten carbide-based alloy. The bearing member is formed of SKD11.

F I G. 4

EP 4 715 864 A1

# Description

Technical Field

Embodiments described herein relate generally to a rotating anode X-ray tube.

Background Art

In general, X-ray tube assemblies are used as X-ray generation sources for medical devices and industrial devices using X-rays to diagnose subjects. An X-ray tube assembly is mounted on an X-ray CT scanner and rotates around the subject. A rotating anode type X-ray tube assembly comprising an X-ray tube of a rotating anode type (hereinafter also referred to as a "rotating anode X-ray tube") is known as an X-ray tube assembly.

Citation List

Patent Literatures

Patent Literature 1: JP S60-117531A
Patent Literature 2: JP H06-196112A

Summary of Invention

Technical Problem

Embodiments described herein aim to provide a rotating anode X-ray tube capable of maintaining desirable rotation of a rotating unit.

Solution to Problem

In general, according to one embodiment, a rotating anode X-ray tube comprises: a cathode emitting electrons; an anode target receiving the electrons and generating X-rays; a sliding bearing including a rotating unit which is connected to the anode target and which extends along a rotation axis, a stationary shaft which rotatably supports the rotating unit, and a lubricant which is held between the rotating unit and the stationary shaft; and a vacuum tube accommodating the cathode and the anode target and fixing the stationary shaft. The rotating unit includes a bearing member which is formed to extend along the rotation axis and which is located to surround the stationary shaft. The stationary shaft is formed of a tungsten carbide alloy. The bearing member is formed of SKD11.

According to another embodiment, a rotating anode X-ray tube comprises: a cathode emitting electrons; an anode target receiving the electrons and generating X-rays; a sliding bearing including a rotating unit which is connected to the anode target and which extends along a rotation axis, a stationary shaft which rotatably supports the rotating unit, and a lubricant which is held between the rotating unit and the stationary shaft; and a vacuum tube accommodating the cathode and the anode target and fixing the stationary shaft. The rotating unit includes a bearing member which is formed to extend along the rotation axis and which is located to surround the stationary shaft. The stationary shaft is formed of a tungsten carbide alloy. The bearing member is formed of a molybdenum alloy.

Brief Description of Drawings

FIG. 1 is a perspective view showing an appearance of an X-ray CT scanner.
FIG. 2 is a cross-sectional view showing the X-ray CT scanner along line II-II in FIG. 1.
FIG. 3 is a front view showing a rotating gantry, an X-ray tube assembly, a cooling unit, and an X-ray detector shown in FIG. 2.
FIG. 4 is a cross-sectional view showing an X-ray tube assembly according to an embodiment.
FIG. 5 is a side view showing a part of a stationary shaft shown in FIG. 4.

Mode for Carrying Out the Invention

Embodiments will be described hereinafter with reference to the accompanying drawings. The disclosure is merely an example, and proper changes within the spirit of the invention, which are easily conceivable by a person of ordinary skill in the art, are included in the scope of the invention as a matter of course. In addition, in some cases, in order to make the description clearer, the widths, thicknesses, shapes and the like, of the respective parts are schematically illustrated in the drawings, compared to the actual modes. However, the schematic illustration is merely an example, and adds no restriction to the interpretation of the invention. Besides, in the specification and drawings, the same elements as those described in connection with preceding drawings are denoted by like reference numbers, and a detailed description thereof is omitted unless necessary.

A rotating anode X-ray tube according to an embodiment will be described below in detail with reference to the drawings.

First, a basic concept of the embodiment of the present invention will be described.

The X-ray tube comprises a cathode and an anode target. X-rays are obtained by bremsstrahlung that occurs when electrons generated at the cathode collide with the anode target. At this time, the efficiency of X-ray generation is approximately 1%, and the remaining 99% becomes heat. Accordingly, the temperature of the anode target rises. If more electrons are made to collide to obtain higher-power X-rays, the temperature rise of the anode target also becomes significant. In order to suppress the temperature of the anode target below its melting point and prevent a local temperature rise in the anode target, the rotating anode X-ray tube that rotates the anode target is generally used. The rotating anode X-ray tube comprises a stationary shaft, a rotating unit, liquid metal, and the like.

In order to prevent the temperature rise of the anode target, it is important to quickly dissipate heat from the rotating anode X-ray tube. Examples of a method of dissipating heat to the outside of the rotating anode X-ray tube include heat dissipation (radiation) from the rotating unit including the anode target, and a method of transferring heat from the anode target to a coolant passing through the stationary shaft via the liquid metal by thermal conduction. When the liquid metal becomes hot, a solid reactant is produced, and the gap between the stationary shaft and the rotating unit is thereby reduced, which may hinder stable rotation of the rotating unit. In other words, it is necessary to quickly cool the stationary shaft with a coolant and prevent the temperature rise of the anode target.

Moreover, the X-ray tube assembly comprising the rotating anode X-ray tube is mounted on the X-ray CT scanner. The X-ray CT scanner comprises the rotating gantry. The X-ray tube assembly revolves at high speed together with the rotating gantry for scanning. When the rotating gantry is rotated, a load (weight) is applied to the rotating anode X-ray tube due to a centrifugal force. At this time, bending deformation occurs in the stationary shaft, but it is necessary to maintain stable rotation of the rotating unit.

Furthermore, since a diagnostic image with higher time resolution can be constructed with a faster revolution speed of the rotating gantry, a revolution speed of the rotating gantry needs to be made faster, in the X-ray CT scanner. In other words, the rotating anode X-ray tubes which can withstand a larger load due to centrifugal force is required.

When deflection caused by centrifugal force occurs at the stationary shaft, the gap between the stationary shaft and the rotating unit becomes uneven. Accordingly, in a place where the gap between the stationary shaft and the rotating unit is narrow, the rotating unit may come into contact with the stationary shaft, seizure may be thereby caused, and the rotation of the rotating unit may be limited.

Furthermore, the liquid metal has a velocity gradient when the rotating unit rotates. More specifically, the liquid metal located on the surface of the stationary shaft is stationary, while the liquid metal located on the surface of the rotating unit rotates. When the rotating unit rotates, the temperature of the liquid metal increases due to the friction between the liquid metal and the rotating unit surface, and the friction caused by the velocity gradient of the liquid metal and the viscosity of the liquid metal. Reduction of the friction is also therefore important.

Therefore, the embodiments of the present invention intend to solve such problems, and can obtain a rotating anode X-ray tube capable of maintaining desirable rotation of a rotating unit.

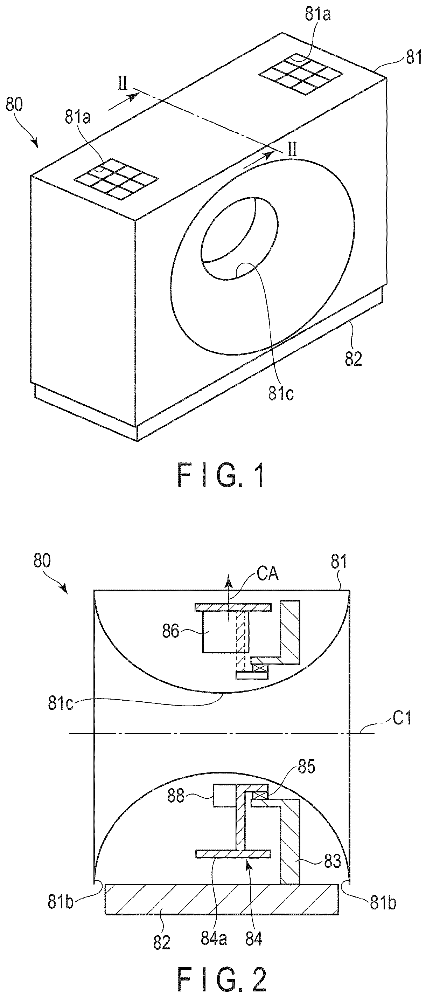

First, a configuration of an X-ray CT scanner 80 will be described with reference to FIG. 1 to FIG. 3.

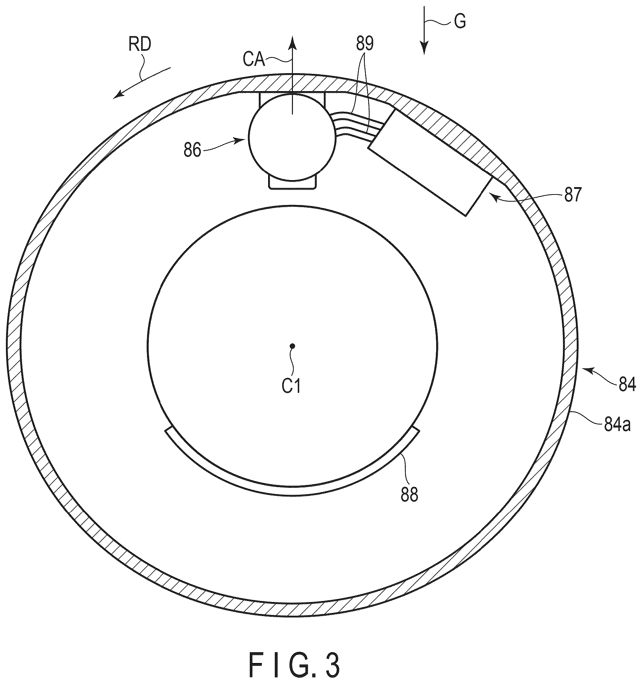

FIG. 1 is a perspective view showing an appearance of the X-ray CT scanner 80. FIG. 2 is a cross-sectional view showing the X-ray CT scanner 80 along line II-II in FIG. 1. FIG. 3 is a front view showing a rotating gantry 84, an X-ray tube assembly 86, a cooling unit 87, and an X-ray detector 88 shown in FIG. 2. As shown in FIG. 1 to FIG. 3, the X-ray CT scanner 80 comprises a housing 81, a base 82, a stationary gantry 83, a rotating gantry 84, a bearing member 85, an X-ray tube assembly 86, a cooling unit 87, and an X-ray detector 88.

The housing 81 accommodates the stationary gantry 83, the rotating gantry 84, the bearing member 85, the X-ray tube assembly 86, and the like. The housing 81 has an exhaust port 81a, an intake port 81b, and an introduction port 81c. Outside air taken in through the intake port 81b is exhausted from the exhaust port 81a. The introduction port 81c is provided to introduce a subject. Although not shown, the X-ray CT scanner 80 also has a bed on which the subject is placed.

The stationary gantry 83 is fixed to the base 82. The rotating gantry (also referred to as a "gantry") 84 is rotatably supported on the stationary gantry 83 via the bearing members 85. The rotating gantry 84 is rotatable about a central axis C1 of the rotating gantry 84. The rotating gantry 84 has a ring-shaped frame portion 84a located on the outermost periphery.

The X-ray tube assembly 86, the cooling unit 87, and the X-ray detector 88 are attached to the rotating gantry 84 and rotate (revolve) together with the rotating gantry 84. As a result, a centrifugal acceleration CA is generated in the X-ray tube assembly 86. The X-ray tube assembly 86 and the cooling unit 87 are attached to an inner wall of the frame portion 84a. The X-ray tube assembly 86 exchanges heat with the cooling unit 87 via a circulation path 89. The X-ray tube assembly 86 functions as an X-ray generator and emits X-rays. The X-ray detector 88 detects X-rays that are emitted from the X-ray tube assembly 86 and have passed through the subject, and converts the detected X-rays into an electrical signal.

The X-ray CT scanner 80 is configured as described above.

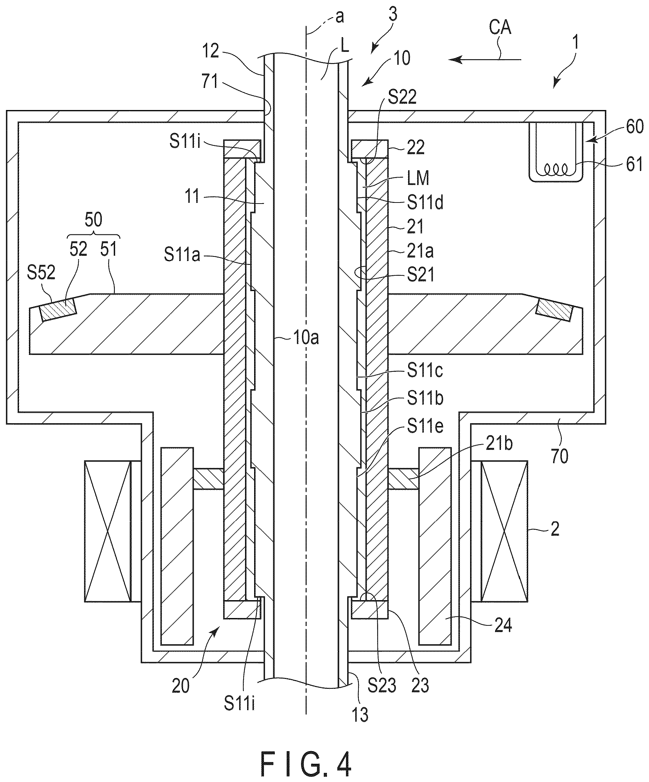

FIG. 4 is a cross-sectional view showing the X-ray tube assembly 86 according to the embodiment.

As shown in FIG. 4, the X-ray tube assembly 86 comprises a rotating anode X-ray tube 1, a stator coil 2 serving as a coil for generating a magnetic field, and the like. The rotating anode X-ray tube 1 comprises a sliding bearing 3, an anode target 50, a cathode 60, and a vacuum tube 70. The sliding bearing 3 includes a stationary shaft 10, a rotating unit 20, and liquid metal LM serving as a lubricant.

The stationary shaft 10 is formed in a cylindrical shape and extends along a rotation axis a, and has radial bearing surfaces S11a and S11b formed on the outer circumferential surface, and a heat transfer portion 10a. The stationary shaft 10 rotatably supports the rotating unit 20. The stationary shaft 10 is composed of a large diameter portion 11, a first small diameter portion 12, and a second small diameter portion 13. The large diameter portion 11, the first small diameter portion 12, and the second small diameter portion 13 are formed coaxially and integrally.

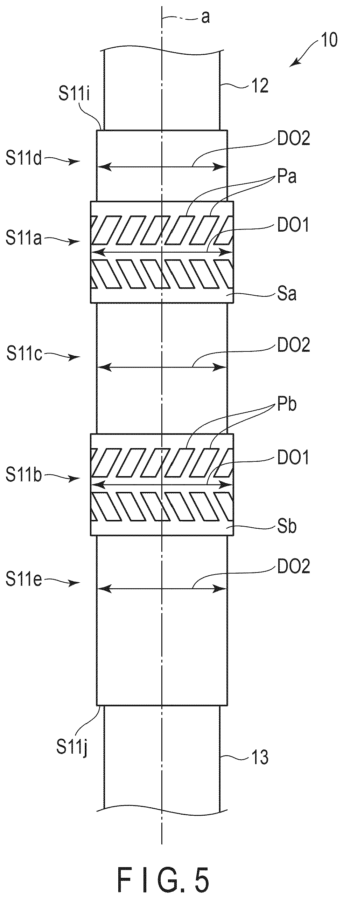

The large diameter portion 11 of the stationary shaft 10 will be described below in detail with reference to FIG. 5. FIG. 5 is a side view showing a part of the stationary shaft 10 shown in FIG. 4.

As shown in FIG. 5, the large diameter portion 11 has a radial bearing surface S11a, a radial bearing surface S11b, a concave surface S11c, a concave surface S11d, and a concave surface S11e, each of which is located on the outer circumferential surface. The large diameter portion 11 also has a thrust bearing surface S11i at one end and a thrust bearing surface S11j at the other end. Each of the radial bearing surface S11a and the radial bearing surface S11b is formed over the entire outer circumferential surface of the large diameter portion 11. Each of the concave surfaces S11c, S11d, and S11e is formed over the entire outer circumferential surface of the large diameter portion 11.

The radial bearing surface S11a and the radial bearing surface S11b are spaced apart in the direction along the rotation axis a. The concave surface S11c is located between the radial bearing surface S11a and the radial bearing surface S11b, and is adjacent to each of the radial bearing surface S11a and the radial bearing surface S11b. The concave surface S11d is located beyond the radial bearing surface S11a from the concave surface S11c, and is adjacent to the radial bearing surface S11a. The concave surface S11e is located beyond the radial bearing surface S11b from the concave surface S11c, and is adjacent to the radial bearing surface S11b.

The radial bearing surface S11a has a plain surface Sa and multiple pattern portions Pa. The plain surface Sa has a smooth outer circumferential surface. The multiple pattern portions Pa are formed by recessing the plain surface Sa. Each of the pattern portions Pa is arranged to extend diagonally in the circumferential direction. The multiple pattern portions Pa are formed at intervals in the direction along the rotation axis a. Incidentally, the multiple pattern portions Pa may be connected in the direction along the rotation axis a.

The radial bearing surface S11b has a plain surface Sb and multiple pattern portions Pb. The plain surface Sb has a smooth outer circumferential surface. The multiple pattern portions Pb are formed by recessing the plain surface Sb. Each of the pattern portions Pb is arranged to extend diagonally in the circumferential direction. The multiple pattern portions Pb are formed at intervals in the direction along the rotation axis a. Incidentally, the multiple pattern portions Pb may be connected in the direction along the rotation axis a.

Each of the pattern portions Pa and each of the pattern portions Pb are formed of a groove having a depth of several tens of $\mu$m. Each of the multiple pattern portions Pa and the multiple pattern portions Pb forms a herringbone pattern. Therefore, each of the radial bearing surfaces S11a and S11b is an uneven surface, which can scoop in the liquid metal LM and facilitate the generation of dynamic pressure by the liquid metal LM.

Each of the concave surfaces S11c, S11d, and S11e is a smooth outer circumferential surface and plain surface. The concave surfaces S11c, S11d, and S11e are recessed relative to the radial bearing surfaces S11a and S11b. In other words, an outer diameter DO2 of a section of the stationary shaft 10 where the concave surfaces S11c, S11d, and S11e are formed is smaller than the smallest outer diameter DO1 among the outer diameters of the sections where the radial bearing surfaces S11a and S11b are formed.

In a direction orthogonal to the rotation axis a, the gap between the concave surfaces (concave surfaces S11c, S11d, and S11e) and the rotating unit 20 is larger than the gap between the radial bearing surface S11a (plain surface Sa) and the rotating unit 20, and is larger than the gap between the radial bearing surface S11b (plain surface Sb) and the rotating unit 20.

The space between the concave surface S11c and the rotating unit 20, the space between the concave surface S11d and the rotating unit 20, and the space between the concave surface S11e and the rotating unit 20 can be made to function as reservoirs for storing the liquid metal LM. Since the liquid metal LM can be supplied to each of the radial bearing surfaces S11a and S11b from both sides, depletion of the liquid metal LM in the bearing gaps can be suppressed.

As shown in FIG. 4, the first small diameter portion 12 is formed in a cylindrical shape having an outer diameter smaller than that of the large diameter portion 11, and is formed to extend from one end of the large diameter portion 11. The first small diameter portion 12 is located on the rotation axis a side of the thrust bearing surface S11i.

The second small diameter portion 13 is formed in a cylindrical shape having an outer diameter smaller than that of the large diameter portion 11, and is formed to extend from the other end of the large diameter portion 11. The second small diameter portion 13 is located on the rotation axis a side of the thrust bearing surface S11j.

The heat transfer portion 10a transfers heat to a coolant flowing inside by forced convection. The coolant is, for example, a cooling liquid L. A cooling rate of the anode target 50 of the rotating anode X-ray tube 1 can be improved by water cooling or oil cooling (insulating oil). Incidentally, the coolant may be air, and the cooling rate of the anode target 50 may be improved by air cooling.

The heat transfer portion 10a is desirably located at least in an area facing the anode target 50, in the direction orthogonal to the rotation axis a. A part of the stationary shaft 10 to which heat can easily be transferred from the anode target 50 can be cooled.

Incidentally, the method of dissipating heat from the stationary shaft 10 to the outside of the rotating anode X-ray tube 1 is not limited to the above-mentioned heat transfer from the heat transfer portion 10a to the coolant but, for example, a heat exchanger may be provided on the outer circumferential surface of the first small diameter portion 12 and the heat inside the stationary shaft 10 may be dissipated by cooling with the heat exchanger. In this case, the rotating anode X-ray tube 1 may be configured without the heat transfer portion 10a and the coolant (cooling liquid L).

The rotating unit 20 is connected to the anode target 50 and extends along the rotation axis a. The rotating unit 20 has a bearing member 21, a first support member 22, a second support member 23, and a cylindrical portion 24.

The bearing member 21 extends along the rotation axis a, is formed in a cylindrical shape, and is located to surround the stationary shaft 10. The bearing member 21 has a bearing member body 21a and a protruding portion 21b. The bearing member body 21a has uniform inner and outer diameters over the entire circumference, and includes a radial bearing surface S21 on its inner circumferential surface.

The protruding portion 21b is formed on both ends of the bearing member body 21a, extending in a direction of separating from the rotation axis a. The protruding portion 21b has an annular shape. The protruding portion 21b may not be formed integrally and continuously with the bearing member body 21a and may be fixed to the outer circumferential surface of the bearing member body 21a by, for example, welding or screws.

The materials of the stationary shaft 10 and the bearing member 21 will be described here.

The material of the stationary shaft 10 is different from the material of the bearing member 21. In addition, the specific gravity of the material of the bearing member 21 is smaller than the specific gravity of the material of the stationary shaft 10. The material of the stationary shaft 10 is a tungsten carbide alloy. The tungsten carbide alloy is, for example, an alloy of tungsten carbide (WC) and cobalt (Co). Incidentally, the tungsten carbide alloy is not limited to an alloy with cobalt (Co), but may be, for example, an alloy with nickel (Ni). In the tungsten carbide alloy, the Young's modulus is 400 to 600 GPa, the specific gravity is 13 to 15 $g/cm^3$, and the thermal conductivity is 100 to 120 W/mK.

The material of the bearing member 21 is SKD11, which is an alloy tool steel material defined in Japanese Industrial Standards (JIS) G 4404:2015, or a molybdenum (Mo) alloy. In SKD11, the Young's modulus is approximately 200 GPa, the specific gravity is approximately 8 $g/cm^3$, and the thermal conductivity is approximately 20 W/mK. In the molybdenum alloy, the Young's modulus is approximately 300 GPa, the specific gravity is

approximately 10 $g/cm^3$, and the thermal conductivity is approximately 100 to 120 W/mK.

In addition, the Vickers hardness of SKD11 is approximately 200 to 250. The Vickers hardness of the molybdenum alloy is approximately twice as high as that of SKD11. The Vickers hardness of the tungsten carbide alloy is approximately 7 to 8 times as high as that of SKD11.

Based on the above, the Young's modulus of the tungsten carbide alloy is greater than that of SKD11 and that of a molybdenum alloy. The specific gravity of SKD11 and that of a molybdenum alloy are smaller than that of a tungsten carbide alloy. The thermal conductivity of a tungsten carbide alloy is greater than that of SKD11 and is substantially the same as that of a molybdenum alloy. The Vickers hardness of a tungsten carbide alloy is higher than that of SKD11 and that of a molybdenum alloy.

In summary, the Young's modulus of the stationary shaft 10 is greater than that of the bearing member 21. The specific gravity of the bearing member 21 is smaller than that of the stationary shaft 10. When the material of the bearing member 21 is SKD11, the thermal conductivity of the stationary shaft 10 is greater than that of the bearing member 21. When the material of the bearing member 21 is a molybdenum alloy, the thermal conductivity of the stationary shaft 10 is approximately the same as that of the bearing member 21. The hardness of the stationary shaft 10 is greater than that of the bearing member 21.

The first support member 22 has an annular shape and is fixed to one end of the bearing member 21. The first support member 22 is formed of a metal such as an iron (Fe) alloy or a molybdenum alloy. The first support member 22 includes a thrust bearing surface S22 that faces the thrust bearing surface S11i of the stationary shaft 10 in the direction along the rotation axis a. The thrust bearing surface S22 is located on the inner circumferential side of the first support member 22 and has an annular shape.

A gap between the first support member 22 and the stationary shaft 10 (first small diameter portion 12) is set to a value that can maintain the rotation of the rotating unit 20 and can suppress leakage of the liquid metal LM. Based on the above, the above gap is small, and the first support member 22 functions as a labyrinth seal ring.

The second support member 23 has an annular shape and is fixed to the other end of the bearing member 21. The second support member 23 is formed of a metal such as an iron alloy or a molybdenum alloy. The second support member 23 includes a thrust bearing surface S23 that faces the thrust bearing surface S11j of the stationary shaft 10 in the direction along the rotation axis a. The thrust bearing surface S23 is located on the inner circumferential side of the second support member 23 and has an annular shape.

A gap between the second support member 23 and the stationary shaft 10 (second small diameter portion 13) is set to a value that can maintain the rotation of the rotating unit 20 and can suppress leakage of the liquid metal LM. Based on the above, the above gap is small, and the second support member 23 functions as a labyrinth seal ring.

The cylindrical portion 24 is joined to the outer circumferential surface of the protruding portion 21b of the bearing member 21. The cylindrical portion 24 is formed of a metal such as copper (Cu) or a copper alloy.

The liquid metal LM is held between the stationary shaft 10 and the rotating unit 20. More specifically, the gap between the stationary shaft 10 (large diameter portion 11), the bearing member 21, the first support member 22, and the second support member 23 is filled with the liquid metal LM. As the liquid metal LM, materials such as a gallium indium (GaIn) alloy or a gallium indium tin (GaInSn) alloy can be used. When the rotating unit 20 rotates, the liquid surface of the liquid metal LM on the rotation axis a side is located closer to the rotation axis a side than the radial bearing surfaces S11a and S11b. The depletion of the liquid metal LM in the bearing gap can be thereby suppressed. The liquid metal LM forms a dynamic pressure sliding bearing together with the bearing surface of the stationary shaft 10 and the bearing surface of the rotating unit 20.

The anode target 50 is formed in an annular shape, and is provided coaxially with the stationary shaft 10 and the bearing member 21. The anode target 50 has an anode target body 51 and a target layer 52 provided on a part of the outer surface of the anode target body 51. The anode target body 51 is formed in an annular shape. The anode target body 51 surrounds the outer periphery of the bearing member 21, and is fixed to the bearing member 21.

The anode target body 51 is formed of molybdenum, tungsten, or an alloy using these metals. A melting point of the metal forming the target layer 52 is the same as a melting point of the metal forming the anode target body 51 or higher than the melting point of the metal forming the anode target body 51. For example, the anode target body 51 is formed of a molybdenum alloy, and the target layer 52 is formed of a tungsten alloy. The anode target body 51 is connected to the rotating unit 20 and fixed to the rotating unit 20.

The anode target 50 is rotatable together with the rotating unit 20. When electrons collide with the target surface S52 of the target layer 52, a focal spot is formed on the target surface S52. The anode target 50 thereby emits X-rays from the focal spot. In other words, the anode target 50 receives electrons and generates X-rays.

The cathode 60 is spaced apart from the target layer 52 of the anode target 50 and is opposed to the target layer 52. The cathode 60 is attached to the inner wall of the vacuum tube 70. The cathode 60 includes a filament 61 as an electron emission source that emits electrons to be applied to the target layer 52.

The vacuum tube 70 is formed in a cylindrical shape. The vacuum tube 70 is formed of glass, ceramic, and metal. In the vacuum tube 70, the outer diameter of the part facing the anode target 50 is larger than the outer diameter of the part facing the tube portion 24. The vacuum tube 70 has openings 71 and 72. The vacuum tube 70 is tightly sealed, accommodates the anode target 50 and the cathode 60, and fixes the stationary shaft 10. The inside of the vacuum tube 70 is maintained in a vacuum state (reduced pressure state).

In order to maintain the airtight state of the vacuum tube 70, the opening 71 is airtightly joined to one end (first small diameter portion 12) of the stationary shaft 10, and the opening 72 is airtightly joined to the other end (second small diameter portion 13) of the stationary shaft 10. The vacuum tube 70 fixes the first small diameter portion 12 and the second small diameter portion 13 of the stationary shaft 10. In other words, the first small diameter portion 12 and the second small diameter portion 13 function as double supporting portions of the bearing.

Incidentally, the rotating anode X-ray tube 1 is not limited to being configured as a double-supported structure in which both ends of the stationary shaft 10 are fixed, but may be configured as a cantilevered structure in which only one end of the stationary shaft 10 is fixed.

The stator coil 2 is provided to face the outer circumferential surface of the rotating unit 20, more specifically, the outer circumferential surface of the cylindrical portion 24 and to surround the outside of the vacuum tube 70. The shape of the stator coil 2 is an annular shape. The stator coil 2 generates a magnetic field applied to the cylindrical portion 24 (rotating unit 20) and rotates the rotating unit 20 and the anode target 50.

As described above, an X-ray tube assembly 86 comprising the rotating anode X-ray tube 1 is formed.

The operations of the X-ray tube assembly 86 will be described below.

When driving the rotating unit 20, the stator coil 2 generates a magnetic field that is supplied to the rotating unit 20 (particularly, the cylindrical portion 24), and imparts a rotational torque T to the rotating unit 20, thereby accelerating the rotating unit 20.

In contrast, friction occurs between the liquid metal LM and the radial bearing surface S21 of the bearing member 21, and inside the liquid metal LM. When the rotational torque T and the friction torque N caused by the above friction match, the rotating unit 20 rotates at a constant speed (number of rotations). If the moment of inertia of the rotating unit is I, the angular velocity is $\omega$, the time is t, the rotational torque is T, and the bearing torque is N, the following equation of angular motion (F) holds true.

$$\mathrm{I}\ (\mathrm{d}\omega\ /\ \mathrm{dt})\ =\ \mathrm{T-N}\ .\ .\ .\ (\mathrm{F})$$

Incidentally, the friction torque N is proportional to the angular velocity $\omega$, and increases as the angular velocity $\omega$ increases.

The heat generation caused by the above friction depends on the rotational torque T. In other words, as the rotational torque T becomes greater, the heat generation caused by the friction becomes greater. According to the equation of angular motion (F), the rotational torque T is proportional to the moment of inertia I of the rotating unit 20. Since the magnitude of the moment of inertia I is proportional to the mass, the mass of the rotating unit 20 is desirably small in order to suppress heat generation caused by the friction. In other words, the specific gravity of the rotating unit 20 (bearing member 21) is desirably small.

In addition, when the rotating unit 20 is rotating, a centrifugal force acts on the bearing member 21 in a direction perpendicular to the rotation axis a and away from the rotation axis a. When the centrifugal force increases, the amount of deformation of the bearing member 21 increases and the gap between the stationary shaft 10 and the bearing member 21 becomes non-uniform. More specifically, the distance from the outer circumferential surface of the stationary shaft 10 to the inner circumferential surface of the bearing member 21 in a direction orthogonal to the rotation axis a becomes longer or shorter as compared to the distance set before the deformation. In the location where the distance is shorter, the bearing member 21 may come into contact with the stationary shaft 10 and cause seizure. Since the magnitude of the centrifugal force is proportional to the mass, the mass of the bearing member 21 is desirably small in order to minimize the non-uniformity of the gap. In other words, the specific gravity of the bearing member 21 is desirably small.

In addition, it is generally known that if the material of the bearing member 21 is the same as the material of the stationary shaft 10 and the bearing member 21 rotates, the bearing member 21 and the stationary shaft 10 adhere to each other, causing seizure to easily occur. In order to avoid adhesion, the material of the bearing member 21 is desirably different from the material of the stationary shaft 10.

When a negative voltage is applied by applying a current to the cathode 60 and a relatively positive voltage is applied to the anode target 50, a potential difference is generated between the cathode 60 and the anode target 50. The filament 61 emits electrons. The electrons are accelerated to collide with the target surface S52, forming a focal spot on the target surface S52, and the focal spot emits X-rays when colliding with the electrons. The electrons that collide with the anode target 50 are converted into X-rays, and the rest are converted into thermal energy. Incidentally, the electron emission source of the cathode 60 is not limited to the filament, but may be, for example, a flat emitter.

The heat generated in the anode target 50 is transferred from the target surface S52 to the inside of the target layer 52, the anode target body 51, the bearing member 21, the liquid metal LM, and the stationary shaft 10 in this order. The heat transferred to the stationary shaft 10 is transferred from the heat transfer portion 10a of the stationary shaft 10 to the cooling liquid L, and is released to the outside of the sliding bearing 3 together with the cooling liquid L. When the temperature rises, the liquid metal LM undergoes a chemical reaction with the radial bearing surfaces S11a, S11b, and S21. As a result, solid reactants are generated on the radial bearing surfaces S11a, S11b, and S21. To transfer more heat from the liquid metal LM to the cooling liquid L, the thermal conductivity of the stationary shaft 10 is desirably large.

Since the heat generated in the anode target 50 is transferred in the above-mentioned order, the temperature of the bearing member 21 is higher than the temperature of the stationary shaft 10. Therefore, the thermal stress generated in the bearing member 21 is greater than the thermal stress generated in the stationary shaft 10. In addition, it is generally known that a material having a higher hardness is lower in toughness (tenacity). In other words, if the bearing member 21 has a high hardness, the bearing member 21 is considered to crack due to thermal stress. For the above reason, the hardness of the bearing member 21 is desirably low in order to prevent the bearing member 21 from cracking due to thermal stress.

When the rotation speed of the rotating unit 20 is lower than a predetermined rotation speed, for example, when the rotating unit 20 starts rotation or when the rotating unit 20 stops rotation, the rotating unit 20 is in contact with the stationary shaft 10. Since the stationary shaft 10 does not rotate (spin), the location of the stationary shaft 10 which is in contact with the rotating unit 20 is determined based on the direction of gravity G and the position of the X-ray tube assembly 86 in the rotation direction RD. For example, as shown in FIG. 3, when the X-ray tube assembly 86 is located directly above the central axis C1, the part of the outer circumferential surface of the stationary shaft 10 that is the farthest from the cathode 60 comes into contact with the inner circumferential surface of the rotating unit 20.

In other words, if the position of the X-ray tube assembly 86 in the rotation direction RD is set to be substantially constant when the rotating unit 20 starts rotation or stops rotation, the stationary shaft 10 comes into contact with the rotating unit 20 at substantially the same location. Incidentally, the location of the bearing member 21, which is in contact with the stationary shaft 10 is not constant since the rotating unit 20 rotates.

The surface of the stationary shaft 10 is scratched by contact made when the rotation starts or stops. When stress is concentrated on the minute irregularities on the surface, which are caused by the scratches, cracks occur on the surface, causing the surface to peel off. The part of the stationary shaft 10 which is peeled off may become wear debris (tiny metal pieces) and may move between the radial bearing surface S21 and the radial bearing surface S11a, or between the radial bearing surface S21 and the radial bearing surface S11b. As described above, when the wear debris moves between the bearing surfaces (radial bearing surfaces S21, S11a, and S11b), seizure may occur. In order to prevent scratches from occurring on the stationary shaft 10 when the rotation starts or stops, the hardness of the stationary shaft 10 is desirably high.

In contrast, if the hardness of the bearing member 21 is low, the occurrence of scratches on the surface of the stationary shaft 10 can be suppressed. In other words, in order to prevent the scratches from occurring on the stationary shaft 10, the hardness of the bearing member 21 is desirably low.

The X-ray tube assembly 86 revolves together with the rotating gantry 84 when the X-ray CT scanner 80 is in operation. At this time, the X-ray tube assembly 86 is subjected to centrifugal acceleration CA. As a result, a load caused by the centrifugal force is applied to the X-ray tube assembly 86, and the stationary shaft 10 is bent. The gap between the stationary shaft 10 and the bearing member 21 becomes non-uniform due to the bending deformation. If the gap becomes non-uniform, seizure may occur as described above. As the Young's modulus is greater, the stationary shaft 10 is hardly bent. Therefore, in order to suppress bending deformation of the stationary shaft 10 and minimize non-uniformity in the gap between the stationary shaft 10 and the bearing member 21, the Young's modulus of the stationary shaft 10 is desirably great.

As described in the present embodiment, if the material of the stationary shaft 10 is a tungsten carbide alloy and the material of the bearing member 21 is SKD11 or a molybdenum alloy, more of the desirable conditions described above are realized as compared to a case where the material of the stationary shaft 10 and the material of the bearing member 21 are SKD11 or a molybdenum alloy, a case where the material of the stationary shaft 10 and the material of the bearing member 21 are a tungsten carbide alloy, and a case where the material of the stationary shaft 10 is SKD11 or a molybdenum alloy and the material of the bearing member 21 is a tungsten carbide alloy.

The effects of the present embodiment will be described below.

According to the rotating anode X-ray tube configured as described above, the rotating anode X-ray tube 1 comprises the stationary shaft 10 and the bearing member 21. The stationary shaft 10 is formed of a tungsten carbide alloy, and the bearing member 21 is formed of SKD11 or a molybdenum alloy. The rotating anode X-ray tube 1 can obtain the following effects depending on the specific gravity, Young's modulus, hardness, and heat conductivity of the stationary shaft 10 and the bearing member 21.

As the specific gravity of the bearing member 21 is smaller, heat generation caused by the rotational torque T can be suppressed. Furthermore, the centrifugal force acting on the bearing member 21 can be reduced by the rotation of the rotating unit 20.

As the Young's modulus of the stationary shaft 10 is greater, it is possible to suppress the stationary shaft 10 deformed with the centrifugal force caused by the revolution of the X-ray tube assembly 86.

As the hardness of the stationary shaft 10 is higher, it is more possible to suppress occurrence of scratches on the stationary shaft 10. In addition, as the hardness of the bearing member 21 is lower, it is more possible to prevent cracks of the bearing member 21 from occurring due to thermal stress.

As the thermal conductivity of the stationary shaft 10 is greater, it is more possible to dissipate heat from the liquid metal LM and to suppress the generation of solid reactants.

Therefore, according to the rotating anode X-ray tube of the present embodiment, more effects described above can be obtained and good rotation of the rotating unit 20 can be maintained as compared to case where the material of the stationary shaft 10 and the material of the bearing member 21 are SKD11 or a molybdenum alloy, a case where the material of the stationary shaft 10 and the material of the bearing member 21 are a tungsten carbide alloy, and a case where the material of the stationary shaft 10 is SKD11 or a molybdenum alloy and the material of the bearing member 21 is a tungsten carbide alloy.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions.

## Claims

1. A rotating anode X-ray tube comprising:

> a cathode emitting electrons;
> an anode target receiving the electrons and generating X-rays;
> a sliding bearing including a rotating unit which is connected to the anode target and which extends along a rotation axis, a stationary shaft which rotatably supports the rotating unit, and a lubricant which is held between the rotating unit and the stationary shaft; and
> a vacuum tube accommodating the cathode and the anode target and fixing the stationary shaft, wherein
> the rotating unit includes a bearing member which is formed to extend along the rotation axis and which is located to surround the stationary shaft,

the stationary shaft is formed of a tungsten carbide alloy, and
the bearing member is formed of SKD11.

2. A rotating anode X-ray tube comprising:

a cathode emitting electrons;
an anode target receiving the electrons and generating X-rays;
a sliding bearing including a rotating unit which is connected to the anode target and which extends along a rotation axis, a stationary shaft which rotatably supports the rotating unit, and a lubricant which is held between the rotating unit and the stationary shaft; and
a vacuum tube accommodating the cathode and the anode target and fixing the stationary shaft, wherein
the rotating unit includes a bearing member which is formed to extend along the rotation axis and which is located to surround the stationary shaft,
the stationary shaft is formed of a tungsten carbide alloy, and
the bearing member is formed of a molybdenum alloy.

F I G. 1

F I G. 2

F I G. 3

F I G. 4

F I G. 5

## INTERNATIONAL SEARCH REPORT

| International application No. |
|---|
| **PCT/JP2024/017838** |

**A. CLASSIFICATION OF SUBJECT MATTER**

*H01J 35/10*(2006.01)i; *F16C 17/02*(2006.01)i; *F16C 33/24*(2006.01)i; *H05G 1/02*(2006.01)i
FI: H01J35/10 N; F16C17/02 Z; F16C33/24 Z; H05G1/02 P

According to International Patent Classification (IPC) or to both national classification and IPC

**B. FIELDS SEARCHED**

Minimum documentation searched (classification system followed by classification symbols)

H01J35/10; F16C17/02; F16C33/24; H05G1/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-075259 A (KABUSHIKI KAISHA TOSHIBA) 15 March 2002 (2002-03-15) fig. 1, paragraph [0031] | 1–2 |
| A | US 3720853 A (PICKER CORPORATION) 13 March 1973 (1973-03-13) fig. 1, column 2, lines 16-22 | 1-2 |
| A | JP 2015-65125 A (KABUSHIKI KAISHA TOSHIBA) 09 April 2015 (2015-04-09) fig. 1, paragraph [0013] | 1-2 |
| P, A | JP 2023-154827 A (CANON ELECTRON TUBES & DEVICES CO., LTD.) 20 October 2023 (2023-10-20) fig. 1, paragraphs [0013], [0033] | 1-2 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/017838**

| Patent document cited in search report | | | Publication date (day/month/year) | Patent family member(s) | Publication date (day/month/year) |
|---|---|---|---|---|---|
| JP | 2002-075259 | A | 15 March 2002 | (Family: none) | |
| US | 3720853 | A | 13 March 1973 | (Family: none) | |
| JP | 2015-65125 | A | 09 April 2015 | (Family: none) | |
| JP | 2023-154827 | A | 20 October 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60117531 A
- JP H06196112 A